# EUROPEAN PATENT SPECIFICATION

(11) **EP 1 414 136 B1**
(45) Date of publication and mention of the grant of the patent: **17.12.2008**
(21) Application number: 03021870.5
(22) Date of filing: 26.09.2003
(51) Int. Cl.: H02K 15/03, H02K 1/27

(54) **Permanent magnet rotor and corresponding method of manufacture**
Dauermagnetischer Läufer und dessen Herstellungsverfahren
Rotor aux aimants permanents et procédé de sa fabrication

(30) Priority: 23.10.2002 JP 2002308282
(43) Date of publication of application: 28.04.2004
(73) Proprietor: Toyota Jidosha Kabushiki Kaisha, Toyota-shi, Aichi-ken, 471-8571 (JP)
(72) Inventor: Igarashi, Osamu, Toyota-shi Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- US-A- 5 841 212
- PATENT ABSTRACTS OF JAPAN vol. 2000, no. 08, 6 October 2000 (2000-10-06) -& JP 2000 145469 A (ISUZU MOTORS LTD), 26 May 2000 (2000-05-26)
- K. ARA ET AL.: "Formation of Magnetic Grating on Steel Plates by Electron/Laser Beam Irradiation" IEEE TRANSACTIONS ON MAGNETICS, vol. 25, no. 5, September 1989 (1989-09), pages 3830-3832, XP001156330
- PATENT ABSTRACTS OF JAPAN vol. 011, no. 204 (E-520), 2 July 1987 (1987-07-02) & JP 62 025844 A (MATSUSHITA ELECTRIC IND CO LTD), 3 February 1987 (1987-02-03)

## Description

### BACKGROUND OF THE INVENTION

### 1. Field of the Invention

The invention relates to a manufacturing method of a permanent magnet rotor.

### 2. Description of the Related Art

As a rotor for a rotary electric machine, a permanent magnet rotor in which permanent magnets are arranged in a circle around a shaft is already well known, and there are proposals for many improvements relating to that kind of rotor. For example, JP-A-10-42498 proposes to achieve a desired magnetic characteristic by irradiating a laser or electron beam at a predetermined region along an outer edge of a rectangular border of the permanent magnets to locally heat up that region and demagnetize it. JP-A-4-183238 proposes constructing a sturdy housing for the permanent magnets by fitting both end portions of an outer cylinder which wraps around the permanent magnets in a flange-shaped peripheral edge portion of a disc-shaped end plate. JP-A-2000-145469 proposes improving the efficiency of assembling a rotary electric machine incorporated into a supercharger by magnetizing the rotor when it is mounted on a rotating shaft and installing the main rotating parts as a single unit into a center housing.

Further, US 5,841,212 discloses a permanent magnetic field type rotating machine, the rotor core of which is made of a single chemical composition material comprising ferromagnetic and non-magnetic zones. The non-magnetic zones consist of a remolten and solidified metal structure and of a merely heated and cooled metal structure, and are present at portions of the rotor core where leakage flux is produced.

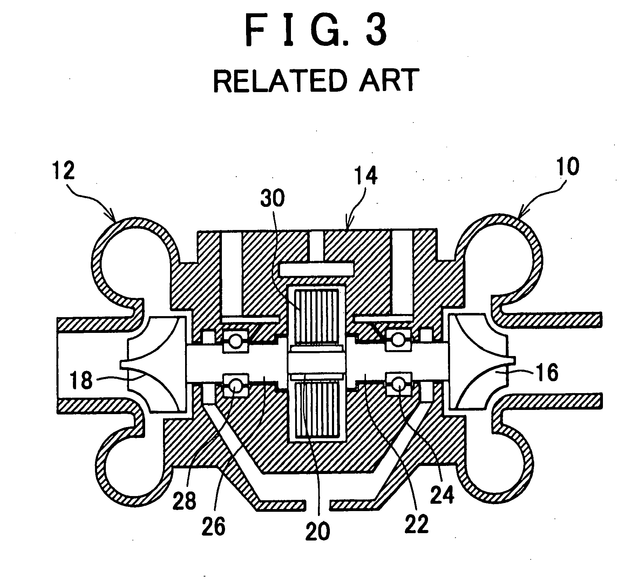

Because the permanent magnet rotor is of a lightweight construction, it is suitable for rotating at high speeds. Rotors used in rotary electric machines in superchargers for internal combustion engines, which operate at high speeds well exceeding 100,000 rpm are normally permanent magnet rotors. FIG. 3 is a sectional view illustrating one example of a supercharger incorporating this kind of rotary electric machine. A supercharger rotor, in which a turbine rotor 16 of a turbine portion 10, a compressor impeller 18 of a compressor portion 12, and a rotor 20 of a rotary electric machine portion 14 are all integrally coupled together, is rotatably supported by a bearing 24 at a shaft portion 22 between the turbine rotor 16 and the rotor 20, as well as by a bearing 28 at a shaft portion 26 between the compressor impeller 18 and the rotor 20. The rotary electric machine portion 14 has a stator 30 which is provided around the rotor 20. In FIG. 3, only the core portion of the stator 30 is shown. The coil is omitted from the drawing for the sake of simplicity.

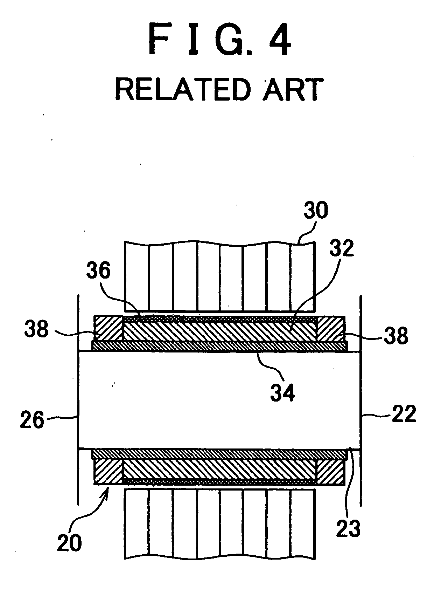

FIG. 4 is a sectional view showing an enlargement of a portion of the rotor 20. In the drawing, a concentric cylindrical body divided into a plurality of individual circular discs is generally provided along the periphery of the shaft portion 23 between the shaft portions 22 and 26. Each of the permanent magnets 32 is magnetized such that the side near the center axis of the rotor 20 and the side away from the center axis have opposing polarities. When the permanent magnets 32 are assembled, the outer surface of half of the periphery of the rotor is an N pole and the outer surface of the remaining half of the periphery of the rotor is an S pole. A layer 34 made of magnetic material is provided on the inside in the radial direction of the permanent magnets 32. A sleeve 36 formed of magnetic material integrally surrounds the series of permanent magnets 32 so as to hold them in place against centrifugal force that acts on them as the rotor 20 rotates.

A pair of rings 38 abut against both ends in the axial direction of the series of permanent magnets 32 to keep them in position in the axial direction. In the illustrated example, the rings 38 are fitted around the magnetic layer 34. However, the length in the axial direction of the magnetic layer 34 and the length in the axial direction of the permanent magnets 32 may also be made the same and the rings may be fitted directly on the shaft portion 22. The rings 38 are members which both serve to maintain the position of the permanent magnets 32 in the axial direction, and provide a portion which can be shaved off to reduce the mass at a suitable location in order to rotationally balance the rotor 20 around its axis. The rings 38 are therefore made of nonmagnetic material so that the shavings that have been shaved off will not be magnetically attracted to the magnetic parts.

According to the structure of the conventional rotor 20 illustrated in FIG. 4, the rings 38 contact the magnetic layer 34 over a very small area (this is also the case when the rings 38 are fitted directly around the shaft portion 22). Therefore, when the rotor is rotated at high speeds well exceeding 100,000 rpm, such as does a rotor in a rotary electric machine in a supercharger of an internal combustion engine, the rings 38 expand radially due to the strong pull from the centrifugal force. Even if the rings 38 are fitted tightly around the magnetic layer 34 beforehand, there is no frictional force between the rings 38 and the magnetic layer 34 so the rings 38 slide in the direction of rotation and their relative rotational positions change with respect to the overall rotor. As a result, the rotor 20, which was rotationally balanced by shaving off a portion of the rings 38, may become unbalanced again. In order to prevent the rings 38 from sliding, some sort of retaining means may be provided at a portion of the rings 38. Doing so, however, results in a concentration of stress at that location, which may lead to a loss of durability of the rings and the magnetic layer or the rotor shaft.

### SUMMARY OF THE INVENTION

In view of the foregoing problems, the invention thus provides an improved method for manufacturing a permanent magnet rotor for a rotary electric machine, as set out in claim 1 or 2.

Such a permanent magnet rotor has a drum which supports permanent magnets, the drum is formed of an original body of magnetic material, which, except for at least one shaft end portion thereof, has been demagnetized by heat treatment. Accordingly, the drum, which both serves to position the permanent magnets around the rotational axis of the rotor as well as provide a portion of which part of the material can be shaved off to achieve rotational balance of the rotor, can be of a construction in which the magnetic layer 34 and the rings 38 of the conventional permanent magnet rotor as illustrated in FIG. 4 are integrated. Therefore, the portion corresponding to the rings 38 is a portion that continues from that integrated i.e. single, structure such that, even if strong centrifugal force acts on that part, the supporting structure of the permanent magnets is able to be reliably retained and the rotational balance, once achieved, is able to be stably maintained. As described above, the drum is formed of the magnetic layer 34 and the rings 38 integrated together in the conventional permanent magnet rotor illustrated in FIG. 4. Making the drum itself an integrated structure is preferable in terms of strength.

Also, the means which keeps the permanent magnets in a predetermined position in the radial, circumferential, and axial directions of the rotor is integrated with the structural body, i.e., the drum, which greatly improves the rotor structurally as well as in terms of strength and stability. Further, operating performance and durability of the rotor also greatly improve.

Further, by having a sleeve, which encircles the permanent magnets on the drum so as to hold these permanent magnets around the drum, fit tightly around the shaft end portion of the drum, a double cylinder structural body is formed which combines, at the shaft end portion, an inner cylinder which wraps around the series of permanent magnets arranged cylindrically, and an outer cylinder. As a result, the structural stability and strength is further improved with respect to high-speed rotation of the rotor.

Accordingly, this structure of the rotor enables increased operability and durability of a supercharger when applied to a rotary electric machine of a supercharger for an internal combustion engine, which operates at high speeds well exceeding 100,000 rpm, and occasionally even 200,000 rpm.

### BRIEF DESCRIPTION OF THE DRAWINGS

The foregoing objects, features and advantages of the invention will become apparent from the following description of preferred embodiments with reference to the accompanying drawings, wherein like numerals are used to represent like elements and wherein:
FIG. 1 is a schematic view illustrating a rotor for a rotary electric machine manufactured according to a first exemplary embodiment of the invention;
FIG. 2 is a schematic view illustrating a rotor for a rotary electric machine manufactured according to a second exemplary embodiment of the invention;
FIG. 3 is a sectional view illustrating a conventional example of a supercharger incorporating a rotary electric machine; and
FIG. 4 is a sectional view showing an enlargement of a portion of the rotor of the rotary electric machine shown in FIG. 3.

### DETAILED DESCRIPTION OF THE PREFERRED EMBODIMENTS

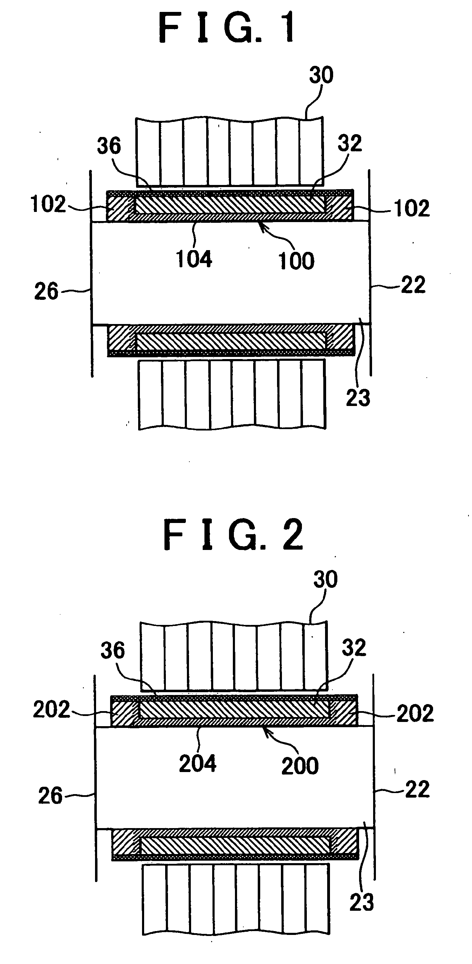

FIG. 1 is a schematic view illustrating a rotor of a rotary electric machine manufactured according to a first exemplary embodiment of the invention for comparison with an example of a conventional rotor structure shown in FIG. 4. Referring to FIG. 1, a shaft portion 23, a stator core 30, a permanent magnet 32, and a sleeve 36, which all correspond to portions shown in FIG. 4, are denoted by the same reference numerals as they are in FIG. 4. In this exemplary embodiment, the portion corresponding to the combination of the magnetic layer 34 and the pair of rings 38 in the conventional example in FIG. 4 is made as a drum 100 from material which is initially nonmagnetic. With the exception of both end portions 102, which are distinguished by hatching in the drawing, the remaining portion 104 is then heat-treated so as to be able to be magnetized. Then, a nonmagnetic portion of the drum 100 is shaved off to achieve rotational balance of the rotor. The permanent magnet 32 is supported by the outer periphery of the heat-treated drum 100. The sleeve 36 in the illustrated exemplary embodiment is longer than the sleeve 36 in the conventional example shown in FIG. 4 by the length covering both end portions 102 of the drum 100. By having the sleeve 36 fit tightly around the outer peripheral surface of both end portions of the drum 100 as well as around the outer peripheral surface of the permanent magnet 32, the sleeve 36 holds the permanent magnet 32 to the drum 100 while achieving a sturdy double-cylinder joined structure of the drum 100 and the sleeve 36.

The nonmagnetic material is able to be magnetized by heat treatment by, for example, heating a nonmagnetic austenitic stainless steel and then cooling it while controlling the cooling rate so that it transforms into any one of a magnetic ferrite, cementite, or martensite. In this case, when the steel is gradually cooled from the austenitic state, layers of ferrite and cementite form alternately. As the cooling rate increases, the ferrite and cementite gradually combine at a fine level. Beyond a certain cooling rate, martensite forms. For heat treating, i.e., heating and cooling, only a portion of material such as steel, heat treatment may be performed such that a portion of the material to be heated is heated while a portion not to be heated is forcibly cooled.

FIG. 2 is a schematic view illustrating a rotor of a rotary electric machine according to a second exemplary embodiment of the invention for comparison with the example of the conventional rotor structure shown in FIG. 4. In FIG. 2 as well, the shaft portion 23, the stator core 30, the permanent magnet 32, and the sleeve 36, which all correspond to portions shown in FIG. 4, are denoted by the same reference numerals as they are in FIG. 4. In this exemplary embodiment, the portion corresponding to the combination of the magnetic layer 34 and the pair of rings 38 in the conventional example in FIG. 4 is made as a drum 200 from material which is initially magnetic. Both end portions 202, which are distinguished by hatching in the drawing, are then heat-treated so that they are not able to be magnetized while the rest of the portion 204 remains magnetized. The permanent magnet 32 is supported on the outer periphery of the heat-treated drum 200, as shown in FIG. 2. Then, a nonmagnetic portion of the drum 200 is shaved off to achieve rotational balance of the rotor. By having the sleeve 36 be of a length that enables it to fit tightly around the outer peripheral surface of both end portions of the drum 200 as well as around the outer peripheral surface of the permanent magnet 32, the sleeve 36 holds the permanent magnet 32 to the drum 200 while achieving a sturdy double-cylinder joined structure of the drum 200 and the sleeve 36.

The portion of the magnetic material is able to be demagnetized by heat treatment by, for example, intensively processing metastable austenite such that it undergoes martensitic transformation, and then heating only the portion to be demagnetized by high-frequency heating or the like.

The length of the drum is longer in the axial direction than the length of the permanent magnet in the axial direction, and the drum has a groove in its periphery that is of a length in the axial direction that is equal to the length of the permanent magnet in the axial direction. More specifically, the outer diameter of both end portions of the drum are greater than the inner diameter of the cylindrical permanent magnet formed by the individual permanent magnets. The permanent magnets are housed in the groove such that they are held to the drum. Further, the drum, which is a single body, has a magnetic portion and a nonmagnetic portion.

The rotor manufactured according to the first and second exemplary embodiments may also be used as a rotor of the rotary electric machine in a supercharger having a rotary electric machine.

In view of strength, it is preferable that the drum be a single body, as is described in the first and second exemplary embodiments. However, in view of convenience in assembly, the drum may also be divided into a plurality of individual sections which can then be assembled. However, at least one of the individual sections has a magnetic portion and a nonmagnetic portion.

## Claims

1. A method for manufacturing a permanent magnet rotor of a rotary electric machine, **characterized in that:**
a single drum-shaped original body of non-magnetic material is heat-treated so that it is able to be magnetized except for the two shaft end portions (102) thereof, and
after heat-treatment, permanent magnets (32) are disposed on the thus obtained drum (100), and
a non-magnetic portion of the drum (100) is shaved off to achieve rotational balance of the permanent magnet rotor.

2. A method for manufacturing a permanent magnet rotor of a rotary electric machine, **characterized in that:**
a single drum-shaped original body of magnetic material is heat-treated so that the two shaft end portions (202) thereof are not able to be magnetized, and
after heat-treatment, permanent magnets (32) are disposed on the thus obtained drum (200), and
a non-magnetic portion of the drum (200) is shaved off to achieve rotational balance of the permanent magnet rotor.

3. The method according to claim 1 or 2, further comprising the step of:
disposing a sleeve (36) which encircles the permanent magnets (32) and which holds the permanent magnets (32) around the drum (100, 200).

## Patentansprüche

1. Verfahren zur Herstellung eines permanentmagnetischen Rotors einer
rotierenden elektrischen Maschine, **dadurch gekennzeichnet, dass** ein einziges zylinderförmiges ursprüngliches Formstück aus nicht magnetischem Material so wärmebehandelt wird, dass es mit Ausnahme der beiden Endstücke (102) in Achsrichtung magnetisierbar wird, und
nach der Wärmebehandlung Permanentmagnete (32) auf dem so erhaltenen Zylinder (100) angeordnet werden, und
ein nicht magnetischer Teil des Zylinders (100) so abgetragen wird, dass eine Rotationsauswuchtung des dauermagnetischen Rotors erzielt wird.

2. Verfahren zur Herstellung eines permanentmagnetischen Rotors einer
rotierenden elektrischen Maschine, **dadurch gekennzeichnet, dass** ein einziges zylinderförmiges ursprüngliches Formstück aus magnetischem Material so wärmebehandelt wird, dass die beiden Endstücke (202) in Achsrichtung nicht magnetisierbar werden, und
nach der Wärmebehandlung Permanentmagnete (32) auf dem so erhaltenen Zylinder (200) angeordnet werden, und
ein nicht magnetischer Teil des Zylinders (200) so abgetragen wird, dass Rotationsauswuchtung des dauermagnetischen Rotors erzielt wird.

3. Verfahren nach Anspruch 1 oder 2, das ferner den folgenden Schritt aufweist:
Anordnen einer Hülse (36), die die Permanentmagnete (32) umgibt und die die Permanentmagnete (32) um den Zylinder (100, 200) herum hält.

## Revendications

1. Procédé de fabrication d'un rotor à aimants permanents d'une machine électrique rotative, **caractérisé en ce que:**
un seul corps original en forme de tambour d'un matériau non magnétique est traité thermiquement de sorte à pouvoir le magnétiser à l'exception de ses deux parties d'extrémités d'arbre (102), et
après le traitement thermique, des aimants permanents (32) sont disposés sur le tambour ainsi obtenu (100), et
une partie non magnétique du tambour (100) est rognée pour obtenir l'équilibre en rotation du rotor à aimant permanent.

2. Procédé de fabrication d'un rotor à aimants permanents d'une machine électrique rotative, **caractérisé en ce que:**
un seul corps original en forme de tambour d'un matériau magnétique est traité thermiquement de sorte que ses deux parties d'extrémités d'arbre (202) ne puissent pas être magnétisées, et
après le traitement thermique, les aimants permanents (32) sont disposés sur le tambour ainsi obtenu (200), et
une partie non magnétique du tambour (200) est rognée pour obtenir l'équilibre en rotation du rotor à aimants permanents.

3. Procédé selon la revendication 1 ou 2, comprenant en plus les étapes consistant à:
disposer un manchon (36) qui entoure les aimants permanents (32) et qui maintient les aimants permanents (32) autour du tambour (100, 200).
